# EUROPEAN PATENT SPECIFICATION

(11) **EP 2 050 278 B1**
(45) Date of publication and mention of the grant of the patent: **20.10.2010**
(21) Application number: 06776655.0
(22) Date of filing: 07.08.2006
(51) Int. Cl.: H04N 7/24, H04N 7/173

(54) **TECHNIQUE FOR CONTROLLING THE DOWNLOAD OF AN ELECTRONIC SERVICE GUIDE**
TECHNIK ZUR STEUERUNG DES HERUNTERLADENS EINER ELEKTRONISCHEN DIENSTANLEITUNG
TECHNIQUE DE GESTION DE TÉLÉCHARGEMENT D'UN GUIDE DE SERVICES ÉLECTRONIQUES

(43) Date of publication of application: 22.04.2009
(73) Proprietor: Telefonaktiebolaget LM Ericsson (publ), 164 83 Stockholm (SE)
(72) Inventor: HARTUNG, Frank, 52134 Herzogenrath (DE); HORN, Uwe, 52066 Aachen (DE); LOHMAR, Thorsten, 52074 Aachen (DE)
(74) Representative: Röthinger, Rainer
(86) International application number: PCT/EP2006/007806
(87) International publication number: WO 2008/017313

(56) References cited:
- EP-A- 1 569 445
- WO-A-2005/029859

## Description

### Field of the Invention

The invention relates to a technique for controlling the download of an electronic guide for mobile television or similar services. More specifically, the invention relates to a technique for controlling the download of an electronic guide for a media content distribution service to a user device.

### Background of the Invention

A television (TV) network for broadcasting TV programs typically comprises a number of channels with at least one TV service per channel, each service consecutively broadcasting its programs. Typically the network offers an accompanying electronic service guide (ESG) or electronic program guide (EPG) which contains information related to the channels/services and programs. ESG and EPG are used synonymously herein and often simply referred to as "electronic guide".

An ESG typically comprises data related to control information and to presentation information. Control information is required by a user device to be able to control reception and presentation of services/programs. Examples for control information are the IP multicast address of a service, data related to the used codecs, timing information, for example related to the broadcast time of a particular program (e.g. "18:01:22 GMT"), etc. The presentation data comprises information intended for presentation to a user, for example on a screen of a user device. Such channel-related and/or program-related presentation information may comprise for example a title and a short description of a program, user timing information, for example "19:00 German time", a link to a webpage providing channel and program-related information, etc.

In recent times, mobile TV systems have been developed with the intention to allow reception of TV services on mobile user devices such as mobile phones, smart phones, PDAs (Personal Digital Assistants), notebooks equipped with appropriate cards for mobile TV reception, and similar mobile user devices. Mobile TV systems may conform, for example, to the DVB-H (Digital Video Broadcasting-Handheld) IPDC

(IP-Data Cast) standard, or the OMA (Open Mobile Alliance) BCAST (Browser and Content-Broadcast Working Group) 1.0 standard.

Networks providing mobile TV services, or more generally multimedia content broadcast services for mobile reception, may be either mobile networks, for example GSM or UMTS networks (these may use for example the OMA BCAST standard), or may be digital broadcast TV networks (these may use for example the DVB-H standard). Future mobile TV systems may be based on at least one of broadcasting services, multicast services, both broadcast and multicast services being generally designated as point-to-multipoint (PTM) services, and point-to-point (PTP, unicast) content distribution services. These services are generally referred to as media content distribution services herein.
An electronic guide such as an ESG usually comprises multiple parts or items represented for example by fragments. A fragment is typically an XML-encoded data set or file. The files/fragments may be linked using references and identifiers to constitute the complete electronic guide. A fragment may for example be related to a particular service, a list of channels or programs of a particular channel/service, or may be related to the content of a particular program. A fragment may also be related to preview data or interactivity data. Details are specified, for example, in the OMA BCAST technical specification (TS) "Mobile Broadcast Services" and the TS "Service Guide for Mobile Broadcast Services".

An electronic guide may be delivered from the network to the user device in different ways. It may for example be broadcasted in multiplex with the services. This is the mechanism specified in DVB-H. Alternatively, the electronic guide may be retrieved by a user device interactively, i.e. by setting up a point-to-point communication with a TV server of the network for retrieval of the guide. This approach is followed in OMA BCAST and in the 3GPP (3^{rd} Generation Partnership Project) MBMS (Multimedia Broadcast/Multicast Services) standard.

For the interactive retrieval of the electronic guide, there is generally only a limited transmission capacity available, for example to not affect the transmission of the TV feed. A common procedure for interactively retrieving an electronic guide aims at retrieving the whole guide. However, this poses a time delay for presenting particular fragments to the user, as due to the limited available transmission capacity at least some of the fragments requested by the user will not (yet) be available in the user device.

According to an alternative procedure for interactive retrieval of an electronic guide, fragments are retrieved not until they are requested by the user. An interactive retrieval of a particular fragment may then be triggered if the user tries to access a particular channel or a program list of a channel or a content description of a particular program. This approach in any case causes a noticeable delay for the user.

Users of TV systems in general and of mobile TV systems in particular tend to often move rapidly between TV channels ("zap"), i.e. the average viewing times of a particular channel may be low, and will be even lower if there is no information available, for example on the ongoing and the next program. The above-discussed delay times thus pose a problem to operators of mobile TV networks with interactive electronic guide retrieval and to providers of the TV services.

For these reasons, there is a need for a technique for controlling a download of an electronic guide for a media content distribution service in such a way that delay times for receiving at least one of presentation information and control information of the electronic guide in a user device are shortened.

### Summary of the Invention

The invention is set out in the claims to which attention is here directed. A method for controlling a download of an electronic guide for a media content distribution service of a telecom network to a user device is proposed. The method comprises the steps of monitoring a user behaviour related to the user device, determining - based on the monitoring - a ranking of fragments of the electronic guide to be downloaded onto the user device, and initiating the download of one or more of the fragments to the user device based on the ranking.

As regards the telecom or telecommunications network, the media content distribution service may be provided by a PTM-enabled network, for example a broadcast-enabled network, or a network enabled for any other PTM service, such as a multicast service. The network may also be enabled additionally or alternatively to offer PTP-services for the media content distribution. The electronic guide may comprise an electronic program or service guide or any other guide including at least one of presentation information and control information related to content PTM services of a PTM-enabled network. The media content may comprise video data, audio data such as speech and music, or multimedia / TV data, i.e. a combination of video data, audio data, picture data and rich media data.

The monitoring step allows a prediction of future behaviour of the user or users of the user device, i.e. a determination of the probability for each of the fragments constituting the electronic guide of being requested for presentation/control by the user device. The monitoring may additionally or alternatively comprise monitoring the user behaviour related to other user equipment of the user.

The download may be performed interactively, i.e. by setting up a point-to-point communication with a network node for retrieval of the guide. The connection setup may be requested by the user device or the network node. In the step of initiating the download, instead of providing all of the fragments for download, only some of the fragments may be provided, namely these fragments which are ranked high, for example, which have been assigned a high priority according to the ranking. The fragments may be provided successively in accordance with their ranking.

The fragments may be ranked according to a probability for each of the fragments of being requested by the user device for at least one of a presentation to a user of the user device and control of the user device. A request for presentation may for example be a request for presentation of the channel list, program list or particular program information entered by a user of the user device into a keypad or similar input terminal of the user device. Another example for a request for presentation is a channel change request of the user, for example in case the user device is configured to present information on the newly selected channel during channel change. On any such request for presentation, the user device tries to access the corresponding fragment(s) in a storage area of the device for retrieval, rendering and, e.g., display on a screen of the device. Fragments, which are already stored in the storage area (and which are not expired), may not be included in the ranking algorithm.

The method according to the first aspect of the invention may be performed in the user device, or it may be performed in a node of the network, for example in a TV server of the network. As a further alternative, one or more of the steps of the method may be performed in the user device (e.g., the monitoring step), and one or some of the steps may be performed in the network (e.g., the determination step and the step of initiating the download).

The electronic guide may comprise fragments to be pushed onto the user device and fragments to be downloaded interactively. For example, control information of the electronic guide may be broadcasted, whereas part or all of the presentation information is provided on request to the user device. At least some fragments to be pushed onto the user device may also be interactively downloadable. In this way, for example fragments may be interactively retrieved without having to wait for the next broadcast of these fragments.

The step of monitoring may comprise detecting a channel list selected by the user. The electronic guide may provide at least one channel list, namely the list of all available channels. Further channel lists may be configurable, for example a list of channels preferred by the user. In case a user rarely selects any of the channel lists, the fragments representing the channel list or parts of the channel list may not be ranked very high for download.

The terms "channel" and "service" are used synonymously herein if not otherwise indicated. It is to be understood that a channel may contain a single service, for example a TV sender/broadcast station, such that the service has its own dedicated channel. A channel may, however, as well contain more than one service, for example four services/stations. All such configurations shall be encompassed by the term "channel" as used herein. Whereas it is acknowledged that the usage of the term "channel" instead of "service" may be technically incorrect in certain circumstances, this terminology is nevertheless commonly used (originating from the era of analogous broadcast) and therefore is followed herein.

The step of monitoring may comprise detecting a selection of a channel by a user. For example, the user may select one of the broadcast channels presented to him from the channel list, or the user may initiate a channel change from one channel to another channel, e.g. the next channel.

The step of monitoring may alternatively, or additionally, comprise detecting a duration of selection of the channel. In case a channel is selected for a long time, fragments representing program list and program information may be ranked high, whereas for a channel selected only for a short time, for example when the user zaps through the channel, only fragments related to the current program may be ranked high.

The step of monitoring may also comprise detecting a program selected by the user. The fragments related to this program may then be ranked high. For example, the position of the program within a schedule of the corresponding service/channel may be detected (the user often watches a program or programs starting at 21:00 GMT). Additionally or alternatively, a content-related aspect of the selected program may be detected (the user watches the news program at 21:00 GMT, but rarely watches any other program at 21:00 GMT; he or she may also watch news programs at other starting times).

Moreover, the step of monitoring may comprise detecting at least one fragment of the electronic guide selected for presentation by the user. For example, an absolut time position (e.g., the starting time) or a position in a time schedule of the particular channel may be detected, or a content-related aspect of the information represented by the fragment (e.g., type of program) may be detected to enable identification of similar fragments. The detecting may additionally or alternatively comprise detecting a selection of at least one of a channel list (or service list), a program list and information related to particular programs provided by the electronic service guide.

The step of monitoring may also comprise detecting an expiry of a fragment downloaded to the user device. For example, a program-related fragment may implicitly expire with the starting time of the subsequent program, or may have an explicit expiry time associated therewith. Even if a fragment would be otherwise ranked high in the determination step, in case of expiry it would be useless to download this fragment, which might therefore be considered in the determination step. A lower ranking might also be determined before the expiry time of the fragment (e.g., a program has been broadcasted already to 80% of its duration).

The step of determining a ranking of fragments may comprise ranking fragments according to at least one channel to which the fragments are related. For example, it may have been detected in a monitoring step that a particular channel is often selected in comparison to the other available channels (i.e., this particular channel is preferred by the user). Fragments related to this particular channel may be ranked higher than fragments related to the other channels. A preference of channels leading to a corresponding ranking of fragments may additionally or alternatively also be configured for evaluation in the determination step, e.g. in a user profile.

The step of determining may then further comprise a ranking of fragments according to at least one of a selection, a frequency of selection and a duration of a selection of the at least one channel to which the fragments are related. For example, fragments related to a particular channel may be ranked higher than other fragments because the channel is included in a list of channels preferred by the user, but may additionally or alternatively be ranked before other fragments because the channel is frequently selected by the user. A more refined ranking determination scheme may further consider that, although the channel (service) is frequently selected, the duration of selection is short for this channel (i.e., the user only zaps through). Detecting a frequency of selections of a channel may include determining the number of selections of this channel within a given number of selections of any of the available channels or of the channels of a particular channel list.

The step of determining a ranking of fragments may comprise ranking fragments according to a program list provided by the electronic guide. For example, if a fragment belonging to a particular program list has been determined to be ranked high, further fragments related to this particular program list may also be ranked high. The step of determining a ranking of fragments may additionally or alternatively comprise ranking fragments according to a frequency of selection of a program list of at least one of the channels to which the fragments are associated. For example, in case a fragment is related to a program list which is frequently selected for presentation, it may be ranked high.

The step of determining a ranking of fragments may comprise ranking fragments according to programs to which the fragments are related. For instance, the fragments may be ranked according to their relative or absolute position in the time schedule of the corresponding channel/service. As an example, fragments representing information related to a program at a preferred usage time of the user device may be ranked high (i.e. the user prefers to watch the channel at 21:00 GMT), although the current time is not near to the usage time (current time is 17:00 GMT). A similar ranking might be applied to fragments related to program highlights of the channel (i.e. a movie to be broadcasted this evening) without considering a user monitoring.

The step of determining a ranking of fragments may then further comprise ranking fragments according to a current program on at least one channel, to which the fragments are related. For example, fragments related to the currently ongoing programs on all preferred channels (according to a list of preferred channels configured by the user and/or determined based on a user monitoring) may be ranked high. Still further, the step of determining a ranking of fragments may comprise ranking fragments according to a subsequent program on the at least one channel to which the fragments are related. For example, the subsequent programs of the most preferred channels may be ranked high.

The electronic guide of the user device may be organized hierarchically. A top level may comprise the channels (services) of a channel list, for example the list of all available channels. Further channel lists may be organized separately or may be derived from the most comprehensive list, which may be the list of (currently or generally) available channels. A second level may comprise the current program for each of the channels/services. A third level may comprise the next programs for each of the channels and further levels may comprise the further subsequent programs. Thus, a branch of the hierarchically organized program/service guide may contain information related to programs of a particular channel/service.

The step of determining a ranking of fragments may thus comprise ranking fragments according to at least one of the levels and branches of the electronic guide the fragments are associated with. For example, fragments may be ranked according to being related to a level (e.g. the level representing the currently ongoing program/s), and additionally according to being related to a branch (e.g. the branches representing the most preferred channels/services).

Alternatively, the step of determining a ranking of fragments may comprise ranking fragments according to groups to which the fragments belong. Fragments may be sorted into groups, e.g. according to the OMA BCAST standard, whereby each fragment belonging to a group may contain a group ID. For example, in case a fragment is ranked high because of other ranking criteria, the further fragments belonging to the group may also be ranked high.

The step of determining a ranking of fragments may comprise the determination of preference groups of channels, at least one of the preference groups indicating channels preferred by the user. As an example, the determination step may include determining the preferred channels from a list of preferred channels configurable by the user or users of the user device. Additionally or alternatively, the determination step may include a determination of these channels which are selected with the highest frequencies. For example, the three channels most often selected are determined to constitute the preference group of the most preferred channels, the three channels with the next highest selection frequencies are determined to constitute the preference group of the preferred channels, and the remaining channels are determined to constitute the preference group of the less preferred channels. In another example the determination step includes a determination of these channels which are selected at least with a predetermined threshold frequency. The most preferred channels are the channels with the highest selection frequencies, which in combination are selected with a frequency of at least two third of all channel selection activities. The most preferred channels may be few or more channels, depending on user behaviour.

The preference groups of channels may also be determined considering the duration of selection of channels to, e.g., allow excluding the channels which are only selected when the user zaps through the channel list.

The step of determining a ranking of fragments may comprise associating fragments with one priority out of at least two priorities. For example, fragments may be associated with a high, medium and low priority. Also, there may exist more different priorities, e.g., as many priorities as there are fragments. The fragments which are of high priority may be scheduled for download to the user device first, followed by the fragments associated to a lower priority.

The step of determining a ranking of fragments may comprise ranking fragments according to a number of fragments simultaneously presentable on a display of the user device. The step of determining a ranking of fragments may then comprise ranking fragments according to a size of at least one of a channel list and a program list when presented on the display. As an example, a program list may comprise fragments representing information on the current program, the next program and further subsequent programs. The screen of the user devices may allow only the presentation of information related to two programs. Then the fragments related to the current and next program may be ranked before the further fragments of the program list, as the presentation of the current and the next program comprises the "first screen" appearing on request of the program list.

The step of initiating the download of the fragments may comprise initiating the download, wherein the fragments are transmitted within a dedicated transaction. Such an electronic guide acquisition transaction may for example comprise transmitting a dedicated request message (e.g. according to OMA BCAST) for one or more fragments from the user device to the network and transmitting a dedicated response message containing one or more of the requested fragments from the network to the user device.

In the alternative, the step of initiating the download of the fragments may comprise initiating a download procedure, wherein the fragments are transmitted piggybacked. For example, a procedure may be provided by the media content distribution system to signal a change of a selected channel from the user device to the network. A further transaction might be provided to signal a current state of the user device to the network. These transactions may be used to transmit a request for fragments. The response message of the network, which typically does not contain any further information than a generic acknowledgement, may then be used for transmitting one or more of the required fragments or electronic guide items piggybacked to the user device.

A computer program is proposed comprising program code portions for performing the steps according to any one of the method aspects described herein when the computer program is run on one or more computing devices. The computer program may be stored on a computer readable recording medium.

A user device is proposed which is adapted for controlling a download of an electronic guide for a media content distribution to the user device. The user device comprises a ranking component for determining, based on a monitoring of a user behaviour related to the user device, a ranking of fragments of the electronic guide to be downloaded interactively onto the user device, and a download component for initiating the download of one or more of the fragments to the user device based on the ranking.

The user device may further comprise a monitoring component for monitoring the user behaviour related to the user device, wherein the monitoring component is communicatively connected to the ranking determination component. Thus, the monitoring is at least partly performed in the user device itself. A further monitoring may for example be performed in the network providing the electronic guide.

A user device is proposed which is adapted for receiving a download of an electronic guide for a media content distribution service, wherein the user device comprises a monitoring component for monitoring a user behaviour related to the user device, and wherein the monitoring component is adapted for communication with a ranking determination component in a network node of a network providing the electronic guide, the ranking determination component being adapted for determining a ranking of fragments of the electronic guide to be downloaded interactively onto the user device.

A network node of a network providing an electronic guide is proposed, wherein the network node is adapted for controlling a download of the electronic guide for a media content distribution service of the network to a user device. The network node comprises a ranking component for determining, based on a monitoring of a user behaviour related to the user device, a ranking of fragments of the electronic guide to be downloaded from the network onto a user device, and a download component for initiating the download of one or more of the fragments to the user device based on the ranking.

The network node may further comprise a first monitoring component for monitoring the user behaviour related to the user device, wherein the first monitoring component is communicatively connected to the ranking determination component. The first monitoring component may be adapted for monitoring the download of one or more of the fragments to the user device.

The network node may comprise an interface component for interfacing with a second monitoring component in the user device, the second monitoring component adapted for monitoring a user behaviour related to the user device, wherein the interface component is communicatively connected to the ranking determination component.

### Brief Description of the Drawings

In the following, the invention will further be described with reference to exemplary embodiments illustrated in the figures, in which:
- Fig. 1: is a schematic illustration of an overall configuration for mobile TV;
- Fig. 2: is a functional block diagram showing the components of a mobile TV application in a user device;
- Fig. 3: is a functional block diagram showing the components of an embodiment of a mobile TV application in a network;
- Fig. 4: is a functional block diagram showing the components of a further embodiment of a mobile TV application in a network;
- Fig. 5: is a schematic illustration of a structure of an electronic service guide as being represented in a user device;
- Fig. 6: is a flow chart illustrating a sequence of operation in a first embodiment of a mobile TV application;
- Fig. 7: is a flow chart illustrating a sequence of operation in a second embodiment of a mobile TV application;
- Fig. 8: is a flow chart illustrating a sequence of operation in a third embodiment of a mobile TV application;
- Fig. 9: is a flow chart illustrating a sequence of operation in a fourth embodiment of a mobile TV application; and
- Figs. 10a-d: are flow charts each illustrating details of the sequence of operation in the embodiment of Fig. 9.

### Detailed Description of Preferred Embodiments

In the following description, for purposes of explanation and not limitation, specific details are set forth, such as specific network types and topologies including particular network nodes etc., in order to provide a thorough understanding of the current invention. It will be apparent to one skilled in the art that the current invention may be practised in other embodiments that depart from these specific details. For example, the skilled artisan will appreciate that the current invention may be practised in any network for providing media content distribution services, to which movable users may attach. The invention is thus applicable to mobile networks which for example implement the OMA BCAST standard or any other standard for mobile TV application. The invention is also applicable to networks for digital TV broadcast/multicast which for example follow the DVB-H standard, or any other standard for digital media content broadcast/multicast distribution. Further, the invention is also applicable to wireless networks such as WLAN or Bluetooth or similar wireless networks, which implement a media content PTM or PTP distribution technique.

Whereas the exemplary embodiments described below are based on broadcast-enabled networks and the PTM transmissions are broadcast transmissions, the skilled person will understand that other PTM or PTP transmission techniques might also be used, for example a PTM technique based on multicast transmission or other PTM or PTP techniques to be developed in the future.

Further, the invention is applicable not only to TV PTM distribution, but to any kind of media content distribution technique, which may, for example, be related to pure video transmission or audio transmission including the transmission of speech, music and similar audio data.

Those skilled in the art will further appreciate that functions explained hereinbelow may be implemented using individual hardware circuitry, using software functioning in conjunction with a programmable microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to a processor, wherein the memory is encoded with one or more programs that perform the methods disclosed herein when executed by the processor.

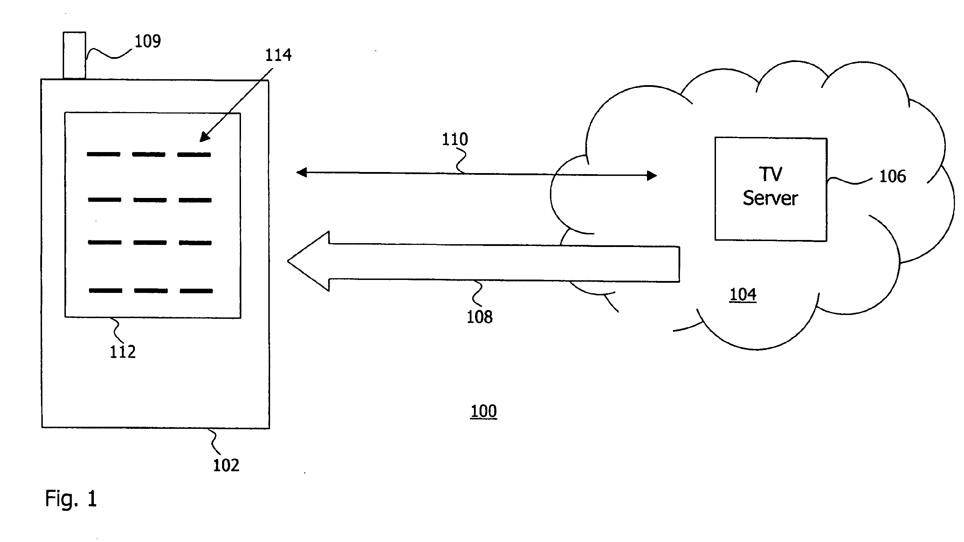

In Fig. 1, an embodiment of a mobile TV system 100 is schematically illustrated. The system comprises a user device 102 and a broadcast-enabled network 104. The network 104 is a mobile network, for example a GSM network or UMTS network. In an alternative embodiment, the network 104 may as well be a digital broadcast network, for example a DVB-H network. In still other embodiments, the network 104 is an IP-based wireline or wireless network.

The network 104 comprises a network node 106 implementing functionalities of a server for mobile TV services. In particular, the TV server 106 controls the broadcast of TV services. These services may comprise standard TV services for dedicated TV receivers and may also comprise services specifically adapted for mobile TV reception on mobile devices such as, e.g., mobile phones, smartphones, etc. with comparatively small screens. A TV program broadcasted by the network 104 is schematically indicated by arrow 108.

The broadcast 108 may be received by the user device 102 via antenna 109. The user device 102 comprises a screen 112 for display of the received broadcast data, i.e. the TV program. The mobile device 102 may be a mobile phone, a smartphone or any other mobile device, for example a notebook with an insertion card plugged in for mobile TV reception according to the OMA BCAST standards or the DVB-H standards.

The network 104 provides an electronic service guide (or, in another embodiment, electronic program guide) which is not broadcasted via the transmission 108 to the user device 102. Instead, the ESG has to be fetched (retrieved interactively) by or pushed onto the user device 102. For retrieval, the device 102 may initiate a unicast communication 110 to the TV server 106. The communication 110 may comprise sending a request for a particular fragment or fragments of the ESG to the server 106, which responds with transmitting one or more of the requested fragments. The communication 110 may be based on an IP-UDP transmission, an IP-TCP-HTTP connection (IP Internet Protocol, UDP User Datagram Protocol, TCP Transmission Control Protocol, HTTP HyperText Transfer Protocol) or may be based on the FLUTE (File delivery over Unidirectional Transport) protocol. Each fragment may be an XML (extensible Markup Language)-encoded data file.

Data of the communication 110 are received via the antenna 109 of the user device 102. For example, the data may be transferred via the radio interface of the mobile network 104. In alternative embodiments, the communication 110 may be based on a purely wireline connection between the TV server 106 and the user device 102. The device 102 may for example establish the communication over an USB interface, an IP-based interface, or the like.

The parts or fragments of the ESG fetched by or pushed onto the user device 102 may be stored in the user device and presented to the user on his or her request. On entering a corresponding command into a keypad (not shown) or similar input device associated with the user device 102, a display 114 of ESG fragments may result on the screen 112, which overlays or replaces other presentations on the screen, for example a running TV program.

The ESG display 114 schematically depicted in Fig. 1 may for example comprise a channel list which shows the broadcast channels available from the network 104. The channel list may comprise a list of all available channels and/or may additionally comprise a sub-list of preferred channels which is configurable by the user. For instance, within the preferred channel list, the user may sort all or a subset of all available channels according to his personal preferences.

The ESG display 114 may also comprise a program list, showing the programs of a particular selected channel, for example the current program and the subsequent programs on this channel. The programs may be displayed with program name, start time of the program and possibly subtitle or similar additional information. The display 114 may also comprise a presentation related to an ongoing or future program, for example including a title of the program, the start time and a detailed program description, for example a summary of the program or a list of topics or actors related to the program.

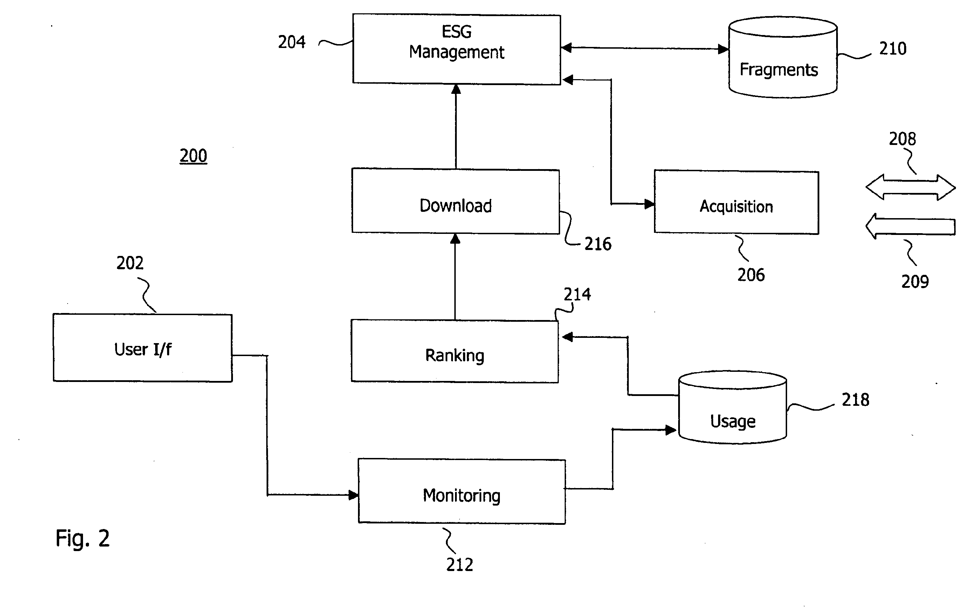

Fig. 2 schematically illustrates the functional building blocks, i.e. the particular components or modules of a mobile TV application 200, which is implemented in the user equipment 102 of Fig. 1. The application 200 is a client to the TV server 106 of Fig. 1. The application 200 comprises a user interface 202 which provides for rendering of the ESG fragments which are requested for presentation 114 on the screen 112 of the user device 102 (see Fig. 1).

An ESG management component 204 performs management functionalities related to the retrieval, storage and presentation of ESG fragments. The ESG management component 204 is connected to a fragment acquisition component 206 which is adapted for retrieving ESG fragments via the unicast communication 110. In the example shown in Fig. 2, the acquisition component 206 is adapted for HTTP-retrieval of fragments from the TV server 106, i.e. the communication 110 is performed via an IP-TCP-HTTP-connection 208. Some ESG fragments may also be received via a broadcast 209 for transmission of media content. Further components of the TV application 200, which are adapted for reception and processing of the media content via the broadcast 209, are omitted in Fig. 2 for clarity.

The management component 204 stores ESG fragments retrieved by the acquisition component 206 in a storage 210, which may be a storage area physically located in a storage unit of the user device 102 dedicated for use by the TV application 200. For presentation of one or more fragments on the screen 112, the fragments are retrieved from the storage 210 by the management component 204 and are forwarded to the user interface component 202. The interface 202 performs rendering of the information represented by the fragments.

The management component also performs control functions related to the presentation of programs. For example, on processing respective fragments including control information related to controlling the reception of services, the management component 204 may communicate with a control component (not shown) of the TV application 200 for control of a presentation of a program broadcasted from the network 104 on the screen 112 of the user device 102.

A monitoring component 212, ranking component 214 and a download component 216 are further provided. The monitoring component 212 is adapted for monitoring the user interface 202. For example, the monitoring component 212 detects a presentation of at least one of a channel list, one or more program lists and one or more programs on the screen of the user device 102 (see Fig. 1). The monitoring component 212 stores usage data, i.e. data representing the detected events, in a storage component 218.

The ranking component 214 is adapted for determining a ranking of fragments to be downloaded interactively. The ranking component 214 determines a ranking of fragments based on the usage data stored in the storage component 218. Based on the ranking, the download component 216 initiates a download of fragments via the HTTP connection 208. In the embodiment depicted in Fig. 2, the download component triggers fragment acquisition via a connection to the ESG management component 204.

In an alternative embodiment, the download component 216 may also be directly connected with the fragment acquisition component 206 to initiate the download of fragments. In a further alternative embodiment, the ranking component 214 may also directly communicate with the monitoring component 212. In a still further alternative embodiment, the monitoring component 212 may be omitted. The usage data stored in the storage component 218 may then comprise user profile data. Several user profiles each representing a typical usage of an ESG may be configured by an operator of the network 104. At least one of these profiles may be stored in the usage data storage 218. A user of the user device may choose and configure a particular of the user profiles. The ranking component 214 may then rely on this particular user profile stored in the storage 218.

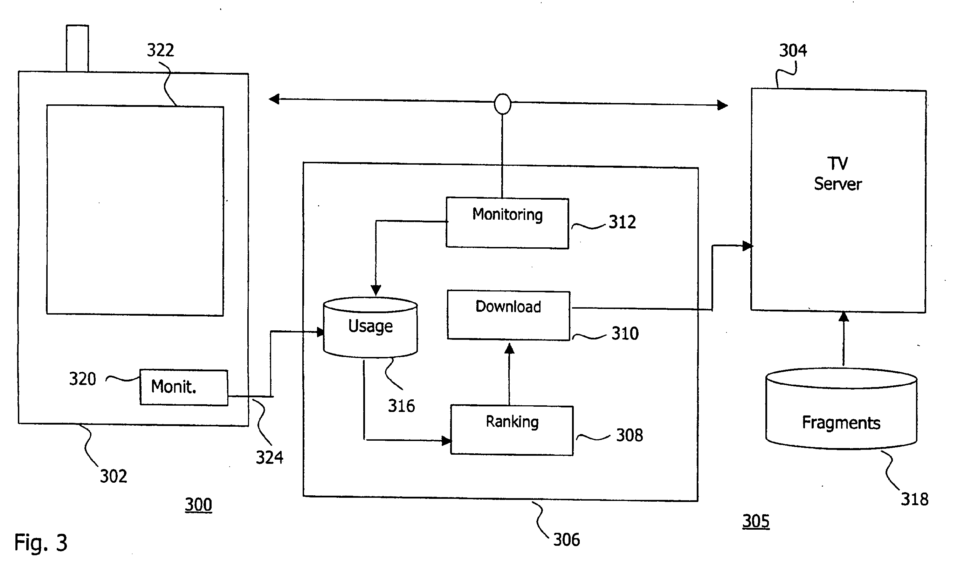

Fig. 3 illustrates another embodiment of a mobile TV system 300 comprising a user device 302, a mobile TV server 304 of a broadcast network 305 and a mobile TV application 306. In this embodiment the application 306 is not implemented in the user device 302, but is implemented in a node of the network 305 (not shown for clarity). For example, the TV application 306 may be implemented as part of the TV server 304.

The application 306 comprises a ranking component 308 for determining a ranking of fragments of the electronic service guide provided by the network 305. The application 306 further comprises a download component 310 for initiating a download of fragments to the user device 302 based on the ranking determined by the ranking component 308.

The application 306 further comprises a monitoring component 312 adapted to monitor a point-to-point (unicast) HTTP connection 314 between the TV server 304 and the user device 302 for retrieval of ESG fragments. The monitoring component 312 is adapted to monitor the retrieval requests sent from the user device 302 to the TV server 304. The component 312 is additionally adapted to monitor the fragments sent by the TV server 304 to the user device 302. For example, the monitoring component 312 monitors the fragments requested for presentation and control purposes by the user device, and further monitors the fragments which are actually downloaded to the user device. The downloaded fragments comprise, in addition to the fragments requested by the user device, also the fragments which are sent to the device 302 without having been requested, namely the fragments which have been determined by the ranking component 310 for download. In addition, there may be fragments sent to the user device on decision of the operator of the network 305. Such fragments may for example represent advertisement information, or presentation information related to news or other information of interest for the users of the mobile TV system 300. In an alternative embodiment, a monitoring component may be adapted to only monitor part of the communication between user device and server, for example only the retrieval requests of the user device.

In the embodiment of Fig. 3, the monitoring component 312 stores data representing the monitored user behaviour and/or download characteristics related to the user device 302 in a storage component 316. The ranking component 308 determines a ranking of fragments to be downloaded to the user device based on the monitoring data stored in the storage 316. The ranking component 308 triggers the download component 310, and the download component 310 signals accordingly to the TV server 304 the fragments determined for download by the component 308. The TV server 304 retrieves the required fragments from a storage 318, which stores fragments related to the ESG offered by the network 305. The server 304 sends the retrieved fragments via the connection 314 to the user device 302.

In the embodiment shown in Fig. 3, a further monitoring component 320 is implemented in the user device 302. The component 320 monitors a user interface (not shown) for presentation of fragments on a screen 322 of the device 302. The monitoring component 320 may send its monitoring data to the application 306 for storage in the storage component 316 via a unicast communication 324, which may for example be an IP-UDP communication or an IP-TCP-HTTP connection for transfer of XML data. The application 306 comprises an interface component (not shown) for interfacing with the monitoring component 320 in the user device 302. The data to be transferred via the connection 324 may comprise selected monitoring data only to limit the resources required for the connection 324.

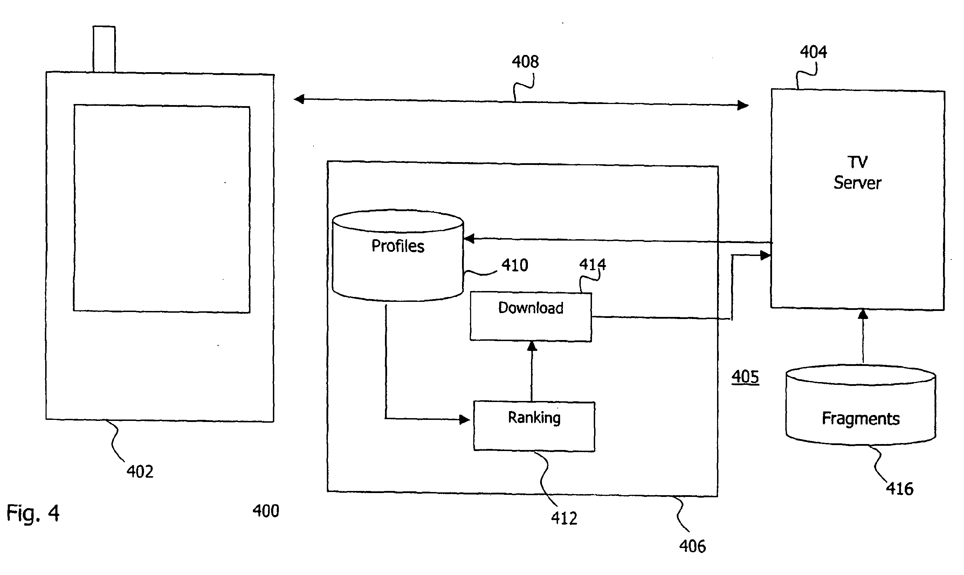

Fig. 4 shows another embodiment of a mobile TV system 400 including a user device 402, a mobile TV server 404 of a broadcast network 405, and a mobile TV application 406. The embodiment of Fig. 4 is similar in many aspects to the embodiment shown in Fig. 3; a description of these aspects will be omitted. The main difference is that in the embodiment of Fig. 4, both of the monitoring components of the embodiment of Fig. 3 have been omitted. No monitoring of any unicast communication 408 between user device 402 and TV server 404 occurs.

The data stored in a storage component 410 of the TV application 406 comprises predetermined user profile data. A user profile, as an example, may specify preferences of users in terms of channels and/or programs and related to preferred program contents, languages, or similar user behaviour. After configuration by an operator of the network 405, from the TV server 404 several user profiles each representing a typical usage of the ESG are stored in the storage 410. One of the predetermined user profiles may or may not be chosen by a user of the user device 402 for configuration and may be stored accordingly in the storage 410. The stored user profiles may thus represent a predetermined behaviour of groups of users (all users have to be associated to one of the profiles) or of single users (each user has to choose a profile for personal configuration). In the former case of non-personalized user profiles, the ranking component 412 determines the fragments to be downloaded for the users being associated to a particular user profile simultaneously.

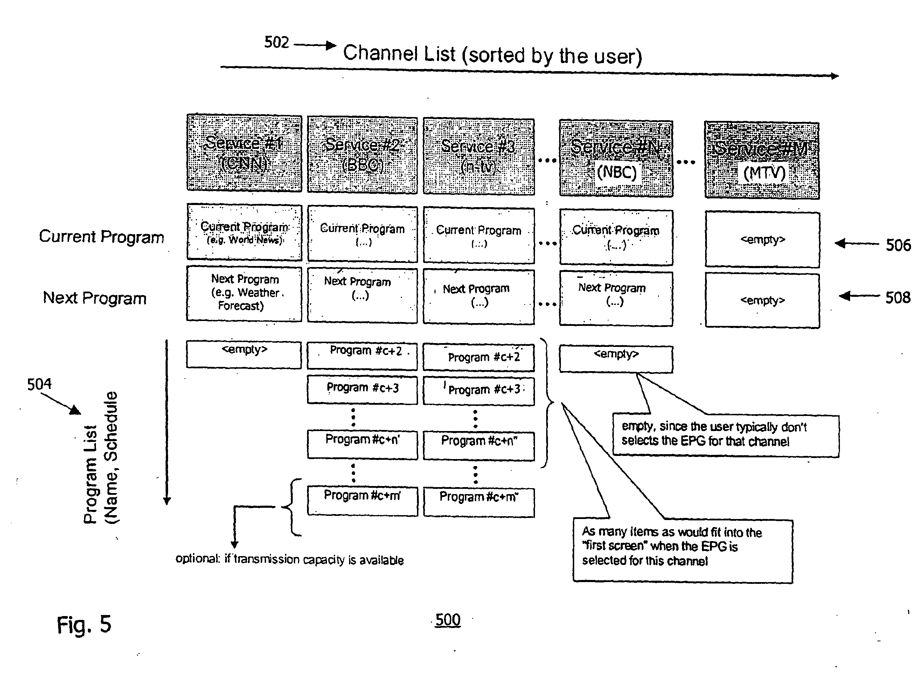

With reference to Fig. 5, an embodiment of an electronic service guide 500 as represented in a user device is described next. The representation 500 of the ESG follows a hierarchical structure. The top level of the hierarchy is formed by a channel list 502. The channel list is configurable by the user, i.e. the user can choose the sequence of channels. In alternative embodiments, the channel list may be sorted automatically according to determined selection frequencies of the channels or other criteria.

Each of the channels comprises a single TV service (in alternative embodiments, a channel may comprise several TV services, for example four TV services). Therefore, M channels comprise services 1, 2, 3, ..., N, ..., M. Each service may be named according to the corresponding TV sender, e.g. "CNN", "BBC", etc. For each channel, a representation of a corresponding program list 504 is provided (the branches of the hierarchical structure 500), wherein the current program as well as subsequent programs may be indicated.

The representation of the ESG 500 in a user device may provide, for example, storage place for all available channels 1 ... M of the channel list 502. Channels 1 ... N may be selected by the user with a 90% probability, based on all channel selection events. For these N services of the channel list 502, storage place for the associated program lists 1 ... N is provided, wherein each program list comprises at least fragments representing the current program and the next program, i.e. the program following the current program. The total storage required in case each current program and next program is represented by a single fragment each, indicating program name and scheduled start time, comprises storage for 2 N fragments.

For the services N+1 ... M, selected only with a 10% probability, no storage place for fragments related to the program list may be reserved. For example, the ranking component 214 in Fig. 2 of the user device or the ranking components 308 or 412 in Fig. 3 or Fig. 4 of the network may have been determined that the user rarely selects these services/channels.

For particular services among the first services 1 ... N, storage place not only for information on the current and next programs, but also for further subsequent programs is reserved. Additional storage place is thus reserved for services 2 ("BBC") and 3 ("n-tv") and therein for representing information on programs #c (current program) +2 ... #c+n'. These #c+n' programs may fit into a first screen or display of the user device, when the program list is selected for presentation. Still further storage place may be reserved for programs #c+n'+1 ... c+m' for subsequent programs on additional displays of the user device in case the user scrolls through the program list of the ESG for a particular channel. No storage place is reserved for the subsequent programs #c+2 ... #c+m' of services other than services 2 and 3, as the user rarely selects and scrolls the program list for these channels.

The overall structure of the representation 500 of an ESG may be programmed into a mobile TV application before installing it on a user device or a network node, or may be configured by a network operator. The user of the device may then choose the services 1 ... N which represent the preferred channels. In the alternative, the N services preferred by the user may be determined automatically. For example, the channel list 502 may represent the channels according to frequency of selection of these channels by the user.

The ESG structure 500 may then be used by a ranking procedure of a ranking component in the user device or the network, i.e. the procedure determines a ranking of each of the items of the structure 500, wherein each item may comprise one or more fragments. For example, the ranking technique may determine to rank the fragments for lines 506 and 508 and for services 1 ... N with highest priority, whereas the fragments for services N+1 ... M and/or other lines are ranked with a lower priority.

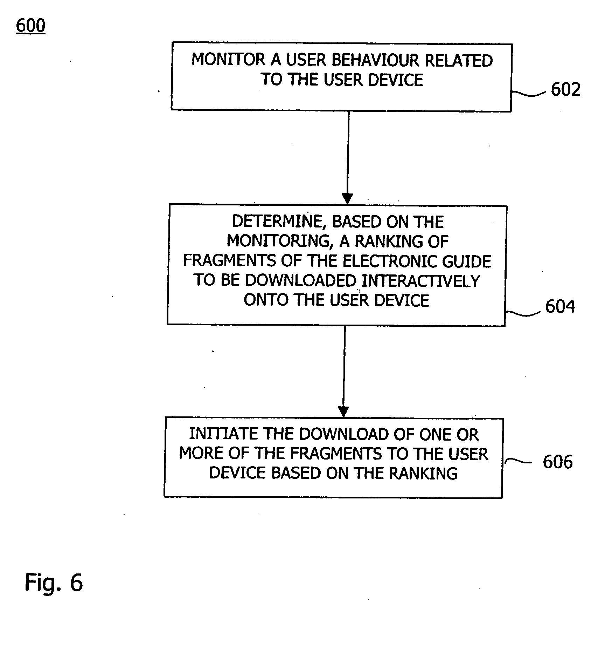

In Fig. 6, a flowchart 600 illustrates a sequence of steps of an embodiment of a method for controlling a download of an electronic service guide for a media content distribution service to a user device.. In a step 602, a user behaviour related to the user device is monitored. This may comprise monitoring a usage of the user device, but may also comprise monitoring other user equipment of the user. In step 604, a ranking of fragments of the electronic service guide to be downloaded from the network onto a user device is determined based on the monitoring. In a step 606, a downloading of one or more of the fragment to the user device is initiated based on the ranking.

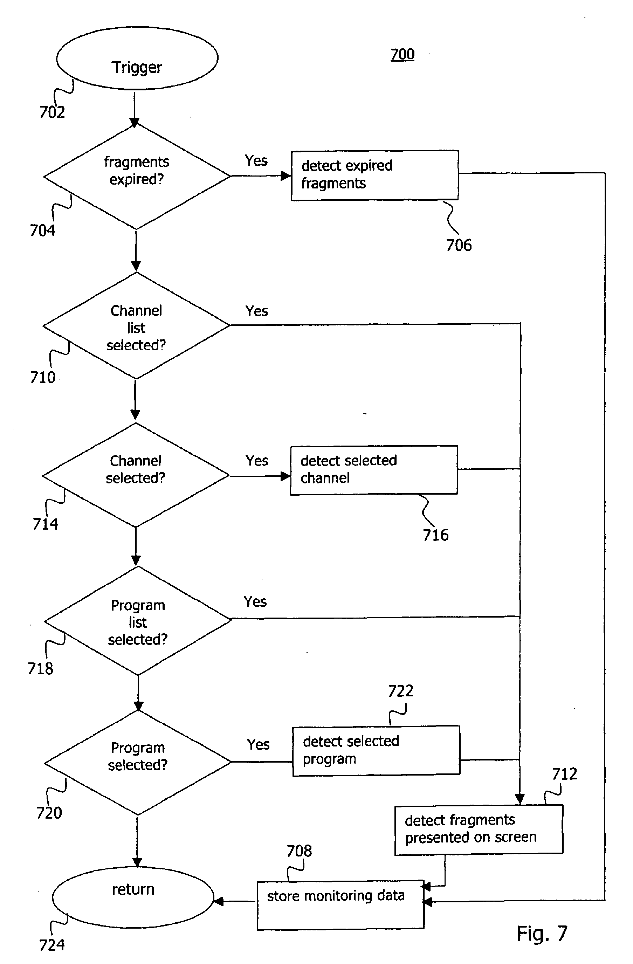

Fig. 7 illustrates an embodiment of a monitoring procedure 700 for monitoring a usage of a user device, for example the device 102 of Fig. 1. The monitoring procedure 700 may be performed for example by the monitoring component 216 of the mobile TV application 200 in Fig. 2, or by the monitoring component 312 and/or 320 in Fig. 3

The monitoring is triggered in step 702 by an event related to the usage of the user device. Such an event may comprise any input of data to the device, for example via a keypad, but may also comprise a trigger signal of a timer subunit of the device for triggering a periodic execution of the monitoring procedure 700.

Next, the monitoring routine 700 detects in step 704 if any of the fragments momentarily stored in the user device have expired. To this end, the monitoring component scans all fragments stored in the user device in step 706. The fragments may either comprise an explicit expiry date, or an expiration may be calculated by the monitoring component, for example from a start time of a program to which the particular fragment may be related to, and the current time. Information identifying the detected expired fragments is stored as usage or monitoring data in step 708. In subsequent steps, the monitoring component checks an input of a user of the user device. In step 710, it is detected, if the channel list has been selected for presentation. If this is the case, the monitoring procedure goes on to step 712 for detecting the fragments which are presented on the screen, i.e. the part of the channel list fitting onto the screen of the user device. This may for example be the channel list 500 shown in Fig. 5, comprising the services 1 ... N and for each channel the current program and the next program. In the final step 708, the monitoring or detection results, i.e. identifications of the fragments which are either expired or presented on the screen, are stored in the usage data storage 218 (see Fig. 2).

In case the monitoring routine 700 detects in step 710 that the channel list of the ESG is not selected, the procedure goes on to step 714 to detect, if a particular channel is selected by the user. Should this be the case, in a step 716 the particular selected channel is detected. The procedure than goes on to step 712 for detecting the channel-related ESG fragments displayed on the screen. Depending on screen size and configuration of the ESG, the display may for example comprise a fragment indicating the title and start time of the current program. The detected fragment(s) are written to storage in step 708.

In case no channel has been selected, the monitoring procedure goes on from step 714 to step 718 for detecting if a program list for a channel has been selected. In case of a positive detection, step 712 is executed to detect the fragments related to presentation of the program list. These fragments may comprise the fragments presented on the first screen, i.e. the initial display or screen presented to the user, when he or she firstly selects the program list, for example fragments representing information related to the current and a next program. In case the user scrolls through the program list, the detected fragments may additionally or alternatively also comprise fragments representing information on subsequent programs.

In case that no program list has been selected in step 718, the routine 700 proceeds to step 720 to detect if a program has been selected. In case of a positive detection event, in step 722, the particular selected program is detected. In the subsequent step 712 it is detected which fragments are presented on the screen.

The monitored usage data stored in step 708 in the storage 218 of the TV application 200 of Fig. 2 may comprise an information related to the selection event itself, i.e. an information that the channel list, a channel, a program list or a program was selected (for determination of selection frequencies). Further, the monitoring data may comprise data identifying the selected channel, selected program list or selected program. Still further, the monitoring data may comprise information related to the fragments presented on the screen of the user device and/or expired fragments.

Having stored the monitoring data, in step 724 the control is returned to a main program (not shown) which will initiate the monitoring routine again in case of the occurrence of a trigger event a step 702.

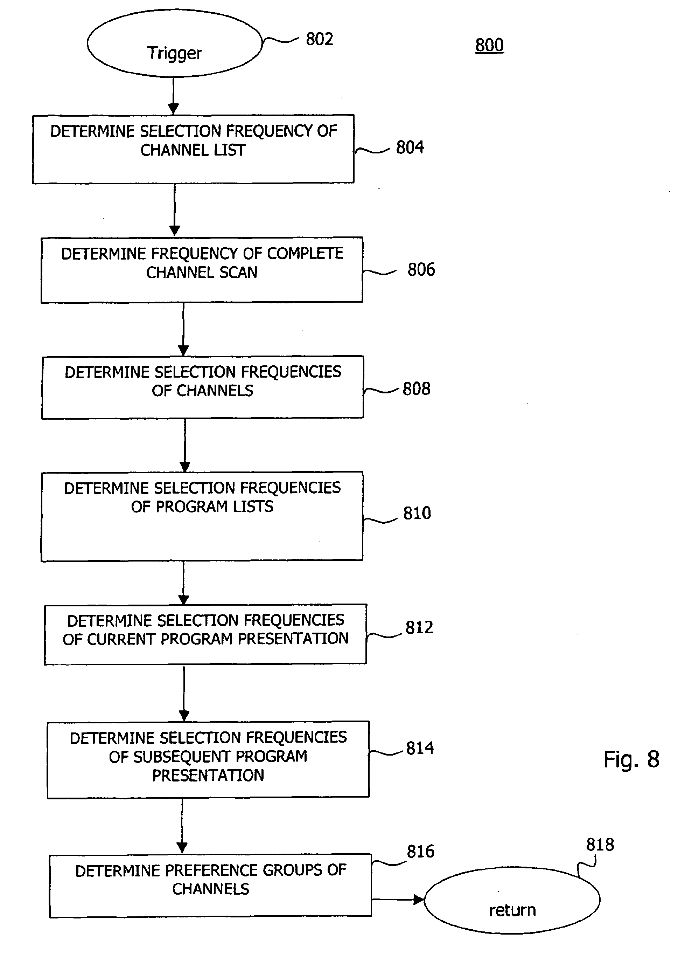

Fig. 8 is a flowchart illustrating a determination routine 800 for determining a ranking of fragments of an electronic service guide to be downloaded. The routine 800 may be performed for example by the ranking component 212 of the mobile TV application 200 in the user device. Alternatively, the routine 800 may also be performed in the embodiment of the ranking component 308 of the network node 306 in Fig. 3.

The determination procedure is triggered by a trigger event in step 802. Such an event may for example be an indication of available transmission capacities for download of ESG fragments onto the user device, the indication being received from the PTM network or components of the user device. Also, a determination procedure 800 may be triggered by a signal received from a monitoring component, indicating that monitoring or usage data stored in a storage of the user device have been updated.

In step 804, the routine determines a selection frequency of the channel list of the ESG. The stored monitoring data may comprise several data sets indicating each a presentation of the channel list on the screen of the user device. The data sets may be time-stamped either explicitly or implicitly by configuring the storage in a way, that it contains only a fixed total number of data sets, wherein the data sets or records are overwritten cyclically. From the subset of data records related to a channel list selection, a selection frequency for the channel list selection may be simply determined.

In a further step 806, a frequency of the complete channel scans is determined. The channel scan frequency indicates, how often the user zaps through all the available channels. This frequency represents a zapping behaviour of the user or users of the user device. In a further step 808, the selection frequency of each of the available channels is determined. The selection frequency may be determined according to the recipe described above with regard to the determination of the channel list selection frequency.

In a further step 810, the selection frequency of the program list for each of the available channels may be determined. In an alternative embodiment, the program list selection frequency may be determined only for particular channels, for example the most often selected channels. In step 812, the selection frequency of ESG fragments representing presentation information related to the or any current program is determined. In other words, the selection frequency is determined for each channel separately and for the sum of all available channels. The latter determination indicates a general user behaviour of choosing the ESG current program presentation independent of which particular channels the user prefers.

In step 814, the routine 800 determines a selection frequency of ESG fragments representing subsequent program presentation information. In case a presentation information related to a program on a particular channel is configured to present a current program together with a next program, both the selection frequencies for a current program presentation and a next program presentation may be identical to each other.

In step 816, preference groups are determined, i.e. the available channels are sorted into groups according to the selection frequencies of the channels (i.e., according to the selection preferences of the user). A first preference group may contain the most often selected channels (i.e. the most preferred channels), for example the channels which account for at least two third of the total number of channel selections. A second preference group may contain the preferred channels, for example the channels (excluding the most preferred channels) which are sorted by the user into leading positions in the channel list. A third preference group may contain the less preferred channels, namely all the available channels which are neither most preferred nor preferred channels.

The determination routine 800 stores the determined frequencies in a particular storage, which may be associated to the usage data storage 218 of the TV application 200 in Fig. 2. In further embodiments of the determination procedure, other or further determination steps may be included. For example, a determination step may be related to determining a duration of selection per channel.

The control is returned in step 818 to a main program which triggers the determination routine 800 again in case of another trigger event in step 802.

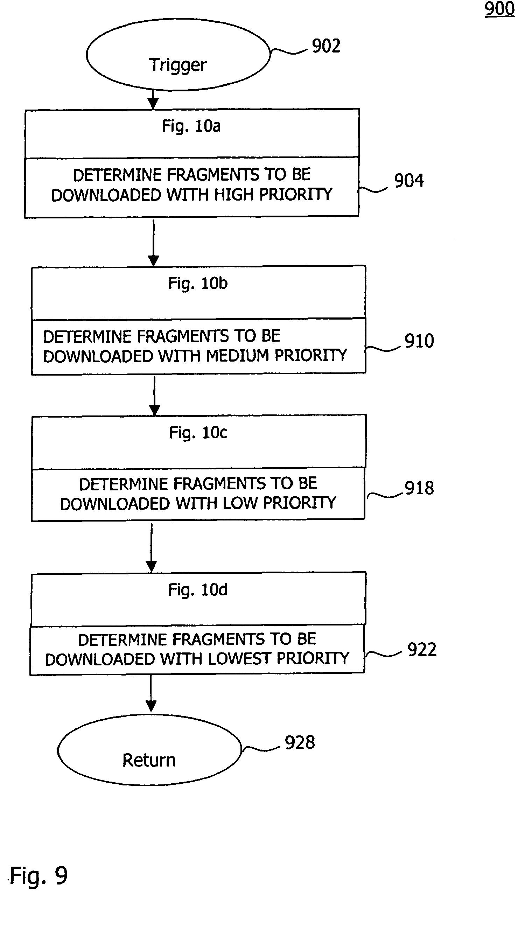

Fig. 9 shows a further embodiment 900 of a determination procedure for sorting fragments to be downloaded into various priority groups. Generally, all fragments which are already present in the user device are excluded from the sorting procedure 900.

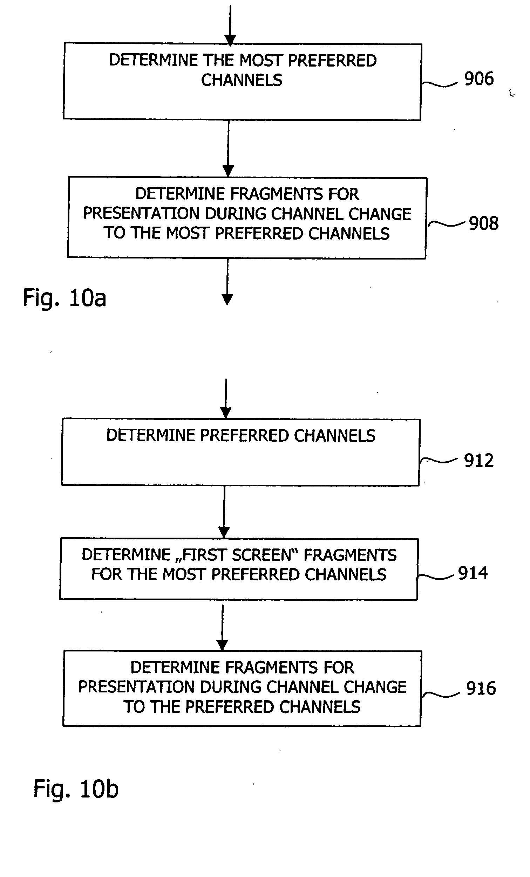

In step 902, the execution of the determination procedure 900 is triggered, for example by the return step 818 of the determination procedure described with respect to Fig. 8. In step 904, fragments to be downloaded with a high priority are determined. An exemplary embodiment for the rules which may be applied during the step 904 is illustrated in Fig. 10a. In a step 906, the most preferred channels are determined. These channels may be determined from the preference groups established in step 816 in Fig. 8. In the subsequent step 908, those fragments are determined which represent presentation information on the current programs during channel change of the most preferred channels. The result of step 904 in Fig. 9 is a list of fragments identified by fragment-IDs which are all assigned a high priority for download, i.e. these fragments are assigned a high rank.

In step 910, fragments to be downloaded with medium priority are determined. The rules to be executed in conjunction with step 910 are illustrated in Fig. 10b. In a step 912, the preferred channels (as opposed to the most preferred channels) are determined which may comprise determining the channels according to the preference group containing the preferred channels established in step 806 in Fig. 8. In step 914, those fragments are determined, which are presented on the first screen of the program list of each of the most preferred channels. In case that fragments representing information on a current program are presented during channel change as well as on the program list, only those fragments are determined which are not already included in the list of fragments to be downloaded with high priority in step 904. In the subsequent step 916, those fragments are determined which represent presentation information on the current programs during channel change to the preferred channels. The result of step 910 may be a list of fragment identified by their fragment-ID which are to be downloaded with medium priority, i.e. these fragments are assigned a medium high rank.

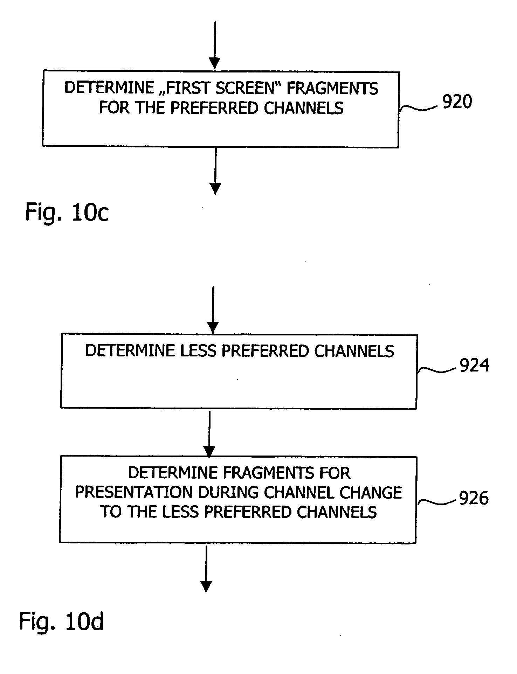

In step 918 of the determination routine 900 of Fig. 9, those fragments are determined which are to be downloaded with a low priority. As an example of the rules to be performed during execution of step 918, Fig. 10c illustrates a single rule 920, according to which those fragments are determined which are presented on the first screen of the program lists of each of the preferred channels. The result of step 918 in Fig. 9 is a list of fragments identified by their respective fragment-ID which are to be downloaded with a low priority, i.e. these fragments are assigned a low rank.

In step 922 of routine 900, those fragments are determined which are to be downloaded with lowest priority. An example of a rule set for performing step 922 is depicted in Fig. 10d. In step 924, the less preferred channels of the available channel are determined. This step may comprise determining the less preferred channels from a preference group of channels determined in step 816 of routine 800 of Fig. 8 which contains the less preferred channels. In a subsequent step 926, those fragments are determined which represent presentation information on the current programs presented to the user during channel change to the less preferred channels. The result of step 922 in Fig. 9 is a list of fragments identified by their fragment-ID to be downloaded with lowest priority from the network, i.e. these fragments are assigned the lowest available rank.

Whereas the steps 904, 910, 918, 922 are illustrated in Fig. 9 as being processed in a particular order, in other embodiments these steps may be processed in different order or may even be processed in parallel. The determination subroutine 900 ends by returning control in step 928 to a main program which will trigger execution of subroutine 900 again on occurrence of a trigger event with step 902.

In another embodiment of a ranking component, determination procedures similar to the routines 700, 800 and 900 of Figs. 7, 8, 9 may be executed consecutively to optimize the ESG availability for the user. The procedures may be executed for example in one of the ranking components 214, 308 or 412 of Figs. 2, 3, 4. In this embodiment, a slightly different set of general rules may be implemented by the determination routines:
1. In case the TV application on the user device displays EPG data during a channel change: The EPG data for the most preferred channels and therein for the current and/or subsequent programs are downloaded with a high priority (in Fig. 5, this comprises services #1 to #N):
   a. If the TV application displays only the information on a current program during channel change, the EPG fragments related to the current programs of the preferred channels are associated a high priority.
   b. If the TV application displays information on the current program and the next program during channel change, also the EPG fragments for the next programs of the most preferred channels are associated a high priority.
2. In case the monitoring function has determined particular EPG program list access patterns (e.g., the user often accesses the EPG program list for channels #2 and channel #3 in Fig. 5, respectively): The EPG program items/fragments which fit into the first EPG program list GUI (Graphical User Interface) or screen are associated a medium priority. Here, the limited size of the screen of the terminal has to be considered and only the fragments are ranked representing information which may be displayed on a single screen.
3. Associate a low priority to each fragment representing information, which is presented on a first screen or display of a program list of the preferred channels.
4. Associate the lowest priority to each fragment representing information, which is presented for one of the less preferred channels on a channel selection event to this channel.

The invention allows the optimization of the availability of an electronic service/program guide for digital multimedia content PTM services despite limited transmission capacities, which may be available for example over the radio interface of a mobile network. Lower delay times for ESG information to be presented to the user increases the user perception of the ESG. This holds for implicit access to the ESG (e.g. during channel change and zapping) or explicit access (e.g. when accessing a program list or detailed program information).

The invention is applicable to mobile TV systems, in which an ESG has to be retrieved interactively; it is also applicable to systems in which the ESG is broadcasted, but can additionally be retrieved interactively. The invention is further applicable to systems in which the ESG is partly broadcasted (for example, the control information) and partly delivered interactively (for example, the presentation information).

While the current invention has been described in relation to its preferred embodiments, it is to be understood, that this description is intended for illustrative, non-limiting purposes only. The invention shall be limited only by the scope of the claims appended hereto.

## Claims

1. A method for controlling a download of an electronic guide (500) for at least one media content distribution service of a telecom network to a user device (102, 302, 402), the electronic guide comprising multiple fragments being related to lists of channels or particular channels of the service, the method comprising the steps of:
- monitoring (700) a user behaviour related to the user device, wherein the step of monitoring comprises detecting a channel list selected by the user containing two or more channels, detecting a selection frequency of the channel list and detecting selection frequencies of the channels of the channel list,
- determining (800, 900), based on the monitoring, a ranking of fragments of the electronic guide to be downloaded onto the user device, wherein the step of determining the ranking of fragments comprises determining (816) preference groups of channels according to the selection frequencies of the channels and according to the position of the channels in the channel list, and
- initiating the download (110, 314, 403) of one or more of the fragments to the user device based on the ranking.

2. The method according to claim 1,
wherein the fragments are ranked according to a probability for each of the fragments of being requested by the user device (102).

3. The method according to claim 1 or 2,
wherein the electronic guide comprises fragments to be pushed onto the user device and fragments to be downloaded interactively.

4. The method according to claim 3,
wherein at least some fragments to be pushed onto the user device are also interactively downloadable.

5. The method according to any one of the preceding claims,
wherein the step of monitoring further comprises detecting at least one of a selection of a channel by the user, a duration of selection of a channel, a program selected by the user, at least one fragment of the electronic service guide selected for
presentation by the user, and an expiry of a fragment downloaded to the user device.

6. The method according to any one of the preceding claims,
wherein the step of determining a ranking of fragments comprises ranking fragments according to at least one of a channel, a program list and a program to which the fragments are related.

7. The method according to any one of the preceding claims,
wherein the step of determining a ranking of fragments comprises ranking fragments according to at least one of levels and branches of the electronic service guide the fragments are associated with.

8. The method according to any one of the preceding claims,
wherein the step of determining a ranking of fragments comprises ranking fragments according to a number of fragments simultaneously presentable on a display of the user device.

9. The method according to any one of the preceding claims,
wherein the step of initiating the download of the fragments comprises initiating a download procedure whereby the fragments are transmitted piggybacked.

10. A computer program comprising program code portions for performing the steps of any one of the preceding claims when the computer program is run on one or more computing devices (102, 302, 304, 404).

11. The computer program of claim 10, stored on a computer readable recording medium.

12. A user device (102) adapted for controlling a download (110) of an electronic guide for at least one media content distribution service to the user device, the electronic guide comprising multiple fragments being related to lists of channels or particular channels of the service, wherein the user device (102) comprises:
- a monitoring component (212) for monitoring the user behaviour related to the user device, wherein the monitoring comprises detecting a channel list selected by the user containing two or more channels, detecting a selection frequency of the channel list and detecting selection frequencies of the channels of the channel list,
- a ranking component (214) for determining, based on the monitoring, a ranking of fragments of the electronic guide to be downloaded interactively onto the user device, wherein the ranking component is communicatively connected to the monitoring component and the determination of the ranking of fragments comprises determining preference groups of channels according to the selection frequencies of the channels and according to the position of the channels in the channel list, and
- a download component (216) for initiating the download of one or more of the fragments to the user device based on the ranking.

13. A system including a network node (304) and a user device (302) adapted for receiving a download of an electronic guide for at least one media content distribution service, the electronic guide comprising multiple fragments being related to lists of channels or particular channels of the service, wherein the user device comprises a monitoring component (320) for monitoring a user behaviour related to the user device, wherein the monitoring comprises detecting a channel list selected by the user containing two or more channels, detecting a selection frequency of the channel list and detecting selection frequencies of the channels of the channel list, and wherein the monitoring component is adapted for communication with a ranking component (308) in said network node (304) of a network providing the electronic guide, the ranking component being adapted for determining, based on the monitoring, a ranking of fragments of the electronic guide to be downloaded interactively onto the user device, wherein the determination of the ranking of fragments comprises determining preference groups of channels according to the selection frequencies of the channels and according to the position of the channels in the channel list.

14. A network node (304, 404) of a network (305, 405) providing an electronic guide, the network node being adapted for controlling a download (314, 403) of the electronic guide for at least one media content distribution service of the network to a user device (302, 402), the electronic guide comprising multiple fragments being related to lists of channels or particular channels of the service, wherein the network node comprises:
- a first monitoring component (312) for monitoring the user behaviour related to the user device, wherein the monitoring comprises detecting a channel list selected by the user containing two or more channels, detecting a selection frequency of the channel list and detecting selection frequencies of the channels of the channel list,
- a ranking component (306, 412) for determining, based on the monitoring, a ranking of fragments of the electronic guide to be downloaded interactively onto the user device, wherein the ranking component is communicatively connected to the first monitoring component and the determination of the ranking of fragments comprises determining preference groups of channels according to the selection frequencies of the channels and according to the position of the channels in the channel list, and
- a download component (310, 414) for initiating the download of one or more of the fragments to the user device based on the ranking.

15. The network node according to claim 14,
further comprising an interface component for interfacing (324) with a second monitoring component (320) in the user device, the second monitoring component adapted for monitoring the user behaviour related to the user device, wherein the interface component is communicatively connected to the ranking component.

## Patentansprüche

1. Verfahren zur Steuerung eines Downloads eines elektronischen Führers (500) für wenigstens einen Medieninhaltsverteilungsdienst eines Telekommunikationsnetzes auf eine Benutzervorrichtung (102, 302, 402), wobei der elektronische Führer mehrere Fragmente umfasst, die mit Listen von Kanälen oder bestimmten Kanälen des Dienstes in Beziehung stehen, wobei das Verfahren die folgenden Schritte umfasst:
- Überwachen (700) eines Benutzerverhaltens in Bezug auf die Benutzervorrichtung, wobei der Schritt des Überwachens ein Erkennen einer durch den Benutzer ausgewählten Kanalliste mit zwei oder mehr Kanälen, ein Erkennen einer Auswahlhäufigkeit der Kanalliste und ein Erkennen von Auswahlhäufigkeiten der Kanäle der Kanalliste umfasst,
- Bestimmen (800, 900) basierend auf der Überwachung einer Rangliste von Fragmenten des auf die Benutzervorrichtung herunterzuladenden elektronischen Führers, wobei der Schritt des Bestimmens der Rangliste von Fragmenten ein Bestimmen (816) von Präferenzgruppen von Kanälen gemäß den Auswahlhäufigkeiten der Kanäle und gemäß der Position des Kanals in der Kanalliste umfasst, und
- Einleiten des Downloads (110, 314, 403) eines oder mehrerer der Fragmente auf die Benutzervorrichtung basierend auf der Rangliste.

2. Verfahren nach Anspruch 1,
wobei die Fragmente gemäß einer Wahrscheinlichkeit für jedes der Fragmente des Angefordertwerdens durch die Benutzervorrichtung (102) gereiht werden.

3. Verfahren nach Anspruch 1 oder 2,
wobei der elektronische Führer auf die Benutzervorrichtung zu pushende Fragmente und interaktiv herunterzuladende Fragmente umfasst.

4. Verfahren nach Anspruch 3,
**wobei wenigstens einige der auf die** Benutzervorrichtung zu pushenden Fragmente auch interaktiv heruntergeladen werden können.

5. Verfahren nach einem der vorhergehenden Ansprüche,
wobei der Schritt des Überwachens ferner ein Erkennen wenigstens eines von einer Auswahl eines Kanals durch einen Benutzer, einer Auswahldauer eines Kanals, einem durch den Benutzer ausgewählten Programms, wenigstens einem durch den Benutzer zur Darstellung ausgewählten Fragments des elektronischen Diensteführers und einem Ablauf eines auf die Benutzervorrichtung heruntergeladenen Fragments umfasst.

6. Verfahren nach einem der vorhergehenden Ansprüche,
wobei der Schritt des Bestimmens einer Rangliste von Fragmenten ein Reihen von Fragmenten gemäß wenigstens eines von einem Kanal, einer Programmliste und einem Programm umfasst, mit dem die Fragmente in Beziehung stehen.

7. Verfahren nach einem der vorhergehenden Ansprüche,
wobei der Schritt des Bestimmens einer Rangliste von Fragmenten ein Reihen von Fragmenten gemäß wenigstens einem von Ebenen und Zweigen des elektronischen Diensteführers umfasst, welchen die Fragmente zugeordnet sind.

8. Verfahren nach einem der vorhergehenden Ansprüche,
wobei der Schritt des Bestimmens einer Rangliste von Fragmenten ein Reihen von Fragmenten gemäß einer Anzahl von Fragmenten umfasst, die gleichzeitig auf einer Anzeige der Benutzervorrichtung dargestellt werden können.

9. Verfahren nach einem der vorhergehenden Ansprüche,
wobei der Schritt des Einleitens des Downloads der Fragmente ein Einleiten eines Downloadverfahrens umfasst, wobei die Fragmente huckepack übertragen werden.

10. Computerprogrammprodu**kt, umfassend** Programmcodeabschnitte zum Durchführen der Schritte nach einem der vorhergehenden Ansprüche, wenn das Computerprogrammprodukt auf einem oder mehreren Rechengeräten (102, 302, 304, 404) ausgeführt wird.

11. Computerprogramm nach Anspruch 10, das auf einem computerlesbaren Aufzeichnungsmedium gespeichert ist.

12. Benutzervorrichtung (102), die zum Steuern eines Downloads (110) eines elektronischen Führers für wenigstens einen Medieninhaltsverteilungsdienst eines Telekommunikationsnetzes auf die Benutzervorrichtung ausgelegt ist, wobei der elektronische Führer mehrere Fragmente umfasst, die mit Listen von Kanälen oder bestimmten Kanälen des Dienstes in Beziehung stehen, wobei die Benutzervorrichtung (102) umfasst:
- eine Überwachungskomponente (212) zum Überwachen des Benutzerverhaltens in Bezug auf die Benutzervorrichtung, wobei das Überwachen ein Erkennen einer durch den Benutzer ausgewählten Kanalliste mit zwei oder mehr Kanälen, ein Erkennen einer Auswahlhäufigkeit der Kanalliste und ein Erkennen von Auswahlhäufigkeiten der Kanäle der Kanalliste umfasst,
- eine Reihungskomponente (214) zum Bestimmen basierend auf der Überwachung einer Rangliste von interaktiv auf die Benutzervorrichtung herunterzuladenden Fragmenten des elektronischen Führers, wobei die Reihungskomponente kommunikativ mit der Überwachungskomponente verbunden ist und die Bestimmung der Rangliste von Fragmenten ein Bestimmen von Präferenzgruppen von Kanälen gemäß den Auswahlhäufigkeiten der Kanäle und gemäß der Position des Kanals in der Kanalliste umfasst, und
- eine Downloadkomponente (216) zum Einleiten des Downloads eines oder mehrerer der Fragmente auf die Benutzervorrichtung basierend auf der Rangliste.

13. System, umfassend einen Netzknoten (304) und eine Benutzervorrichtung (302), ausgelegt zum Empfangen eines Downloads eines elektronischen Führers für wenigstens einen Medieninhaltsverteilungsdienst, wobei der elektronische Führer mehrere Fragmente umfasst, die mit Listen von Kanälen oder bestimmten Kanälen des Dienstes in Beziehung stehen, wobei die Benutzervorrichtung eine Überwachungskomponente (320) zum Überwachen des Benutzerverhaltens in Bezug auf die Benutzervorrichtung umfasst, wobei das Überwachen ein Erkennen einer durch den Benutzer ausgewählten Kanalliste mit zwei oder mehr Kanälen, ein Erkennen einer Auswahlhäufigkeit der Kanalliste und ein Erkennen von Auswahlhäufigkeiten der Kanäle der Kanalliste umfasst, und **wobei die** Überwachungskomponente zur Kommunikation mit einer Reihungskomponente (308) im Netzknoten (304) eines Netzes, das den elektronischen Führer bereitstellt, ausgelegt ist, die Reihungskomponente zum Bestimmen basierend auf der Überwachung einer Rangliste von interaktiv auf die Benutzervorrichtung herunterzuladenden Fragmenten des elektronischen Führers ausgelegt ist, wobei die Bestimmung der Rangliste von Fragmenten ein Bestimmen von Präferenzgruppen von Kanälen gemäß den Auswahlhäufigkeiten der Kanäle und gemäß der Position des Kanals in der Kanalliste umfasst.

14. Netzknoten (304, 404) eines Netzes (305, 405), das einen elektronischen Führer bereitstellt, wobei der Netzknoten zum Steuern eines Downloads (314, 403) eines elektronischen Führers für wenigstens einen Medieninhaltsverteilungsdienst des Netzes auf eine Benutzervorrichtung (302, 402) ausgelegt ist, wobei der elektronische Führer mehrere Fragmente umfasst, die mit Listen von Kanälen oder bestimmten Kanälen des Dienstes in Beziehung stehen, wobei der Netzknoten umfasst:
- eine erste Überwachungskomponente (312) zum Überwachen des Benutzerverhaltens in Bezug auf die Benutzervorrichtung, wobei das Überwachen ein Erkennen einer durch den Benutzer ausgewählten Kanalliste mit zwei oder mehr Kanälen, ein Erkennen einer Auswahlhäufigkeit der Kanalliste und ein Erkennen von Auswahlhäufigkeiten der Kanäle der Kanalliste umfasst,
- eine Reihungskomponente (306, 412) zum Bestimmen basierend auf der Überwachung einer Rangliste von interaktiv auf die Benutzervorrichtung herunterzuladenden Fragmenten des elektronischen Führers, wobei die Reihungskomponente kommunikativ mit der Überwachungskomponente verbunden ist und die Bestimmung der Rangliste von Fragmenten ein Bestimmen von Präferenzgruppen von Kanälen gemäß den Auswahlhäufigkeiten der Kanäle und gemäß der Position des Kanals in der Kanalliste umfasst, und
- eine Downloadkomponente (310, 414) zum Einleiten des Downloads eines oder mehrerer der Fragmente auf die Benutzervorrichtung basierend auf der Rangliste.

15. Netzknoten nach Anspruch 14,
ferner umfassend eine Schnittstellenkomponente zum Verbinden (324) mit einer zweiten Überwachungskomponente (320) in der Benutzervorrichtung, wobei die zweite Überwachungskomponente zum Überwachen des Benutzerverhaltens in Bezug auf die Benutzervorrichtung ausgelegt ist, wobei die Schnittstellenkomponente kommunikativ mit der Reihungskomponente verbunden ist.

## Revendications

1. Procédé de commande d'un téléchargement d'un guide électronique (500) destiné à au moins un service de distribution de contenu média d'un réseau de télécommunication vers un dispositif d'utilisateur (102, 302, 402), le guide électronique comprenant des fragments multiples étant associés à des listes de canaux ou des canaux particuliers du service, le procédé comprenant les étapes consistant à :
- surveiller (700) un comportement d'utilisateur relatif au dispositif d'utilisateur, dans lequel l'étape de surveillance comprend la détection d'une liste de canaux sélectionnée par l'utilisateur contenant deux ou plusieurs canaux, la détection d'une fréquence de sélection de la liste de canaux et la détection des fréquences de sélection des canaux de la liste de canaux,
- déterminer (800, 900), sur la base de la surveillance, un classement hiérarchique des fragments du guide électronique à télécharger sur le dispositif d'utilisateur, dans lequel l'étape de détermination du classement hiérarchique des fragments comprend la détermination (816) de groupes de préférence de canaux selon les fréquences de sélection des canaux et selon la position des canaux dans la liste de canaux, et
- amorcer le téléchargement (110, 314, 403) d'un ou plusieurs des fragments vers le dispositif d'utilisateur sur la base du classement hiérarchique.

2. Procédé selon la revendication 1,
**dans lequel les fragments sont classés** hiérarchiquement selon une probabilité que chacun des fragments soit demandé par le dispositif d'utilisateur (102).

3. Procédé selon la revendication 1 ou 2,
dans lequel le guide électronique comprend des fragments à pousser sur le dispositif d'utilisateur et des fragments à télécharger interactivement.

4. Procédé selon la revendication 3,
dans lequel au moins certains fragments à pousser sur le dispositif d'utilisateur peuvent aussi être téléchargés interactivement.

5. Procédé selon une quelconque des revendications précédentes,
dans lequel l'étape de surveillance comprend en outre la détection d'au moins un d'une sélection d'un canal par l'utilisateur, une durée de sélection d'un canal, un programme sélectionné par l'utilisateur, au moins un fragment du guide de service électronique sélectionné pour la présentation par l'utilisateur, et une expiration d'un fragment téléchargé vers le dispositif d'utilisateur.

6. Procédé selon une quelconque des revendications précédentes,
dans lequel l'étape de détermination d'un classement hiérarchique de fragments comprend le classement hiérarchique de fragments selon au moins un d'un canal, une liste de programmes et un programme auquel les fragments sont associés.

7. Procédé selon une quelconque des revendications précédentes,
dans lequel l'étape de détermination d'un classement hiérarchique de fragments comprend le classement hiérarchique de fragments selon au moins un des niveaux et branches du guide de service électronique auquel les fragments sont associés.

8. Procédé selon une quelconque des revendications précédentes,
dans lequel l'étape de détermination d'un classement hiérarchique de fragments comprend le classement hiérarchique de fragments selon un nombre de fragments pouvant être présentés simultanément sur un écran du dispositif d'utilisateur.

9. Procédé selon une quelconque des revendications précédentes,
dans lequel l'étape d'amorce du téléchargement des fragments comprend l'amorce d'une procédure de téléchargement, moyennant quoi les fragments sont transmis par superposition (« piggyback »).

10. Programme informatique comprenant des portions de code de programme pour mettre en oeuvre les étapes d'une quelconque des revendications précédentes quand le programme informatique est exécuté sur un ou plusieurs dispositifs informatiques (102, 302, 304, 404).

11. Programme informatique selon la revendication 10, mémorisé sur un support d'enregistrement lisible par ordinateur.

12. Dispositif d'utilisateur (102) adapté pour commander un téléchargement (110) d'un guide électronique destiné à au moins un service de distribution de contenu média sur le dispositif d'utilisateur, le guide électronique comprenant des fragments multiples étant associés à des listes de canaux ou des canaux particuliers du service, dans lequel le dispositif d'utilisateur (102) comprend :
- un composant de surveillance (212) pour surveiller le comportement d'utilisateur associé au dispositif d'utilisateur, dans lequel la surveillance comprend la détection d'une liste de canaux sélectionnée par l'utilisateur contenant deux ou plusieurs canaux, la détection d'une fréquence de sélection de la liste de canaux et la détection des fréquences de sélection des canaux de la liste de canaux,
- un composant de classement hiérarchique (214) pour déterminer, sur la base de la surveillance, un classement hiérarchique des fragments du guide électronique à télécharger interactivement sur le dispositif d'utilisateur, dans lequel le composant de classement hiérarchique est connecté de manière communicante au composant de surveillance et la détermination du classement hiérarchique des fragments comprend la détermination de groupes de préférence de canaux selon les fréquences de sélection des canaux et selon la position des canaux dans la liste de canaux, et
- un composant de téléchargement (216) pour amorcer le téléchargement d'un ou plusieurs des fragments vers le dispositif d'utilisateur sur la base du classement hiérarchique.

13. Système incluant un noeud de réseau (304) et un dispositif d'utilisateur (302) adapté pour recevoir un téléchargement d'un guide électronique destiné à au moins un service de distribution de contenu média, le guide électronique comprenant des fragments multiples étant associés à des listes de canaux ou des canaux particuliers du service, dans lequel le dispositif d'utilisateur comprend un composant de surveillance (320) pour surveiller un comportement d'utilisateur associé au dispositif d'utilisateur, dans lequel la surveillance comprend la détection d'une liste de canaux sélectionnée par l'utilisateur contenant deux ou plusieurs canaux, la détection d'une fréquence de sélection de la liste de canaux et la détection des fréquences de sélection des canaux de la liste de canaux, et dans lequel le composant de surveillance est adapté pour la communication avec un composant de classement hiérarchique (308) dans ledit noeud de réseau (304) d'un réseau fournissant le guide électronique, le composant de classement hiérarchique étant adapté pour la détermination, sur la base de la surveillance, d'un classement hiérarchique des fragments du guide électronique à télécharger interactivement sur le dispositif d'utilisateur, dans lequel la détermination du classement hiérarchique des fragments comprend la détermination de groupes de préférence des canaux selon les fréquences de sélection des canaux et selon la position des canaux dans la liste de canaux.

14. Noeud de réseau (304, 404) d'un réseau (305, 405) fournissant un guide électronique, le noeud de réseau étant adapté pour commander un téléchargement (314, 403) du guide électronique destiné à au moins un service de distribution de contenu média du réseau vers un dispositif d'utilisateur (302, 402), le guide électronique comprenant des fragments multiples étant associés à des listes de canaux ou des canaux particuliers du service, dans lequel le noeud de réseau comprend :
- un premier composant de surveillance (312) pour surveiller le comportement d'utilisateur associé au dispositif d'utilisateur, dans lequel la surveillance comprend la détection d'une liste de canaux sélectionnée par l'utilisateur contenant deux ou plusieurs canaux, la détection d'une fréquence de sélection de la liste de canaux et la détection de fréquences de sélection des canaux de la liste de canaux,
- un composant de classement hiérarchique (306, 412) pour déterminer, sur la base de la surveillance, un classement hiérarchique des fragments du guide électronique à télécharger interactivement sur le dispositif d'utilisateur, dans lequel le composant de classement hiérarchique est connecté de manière communicante au premier composant de surveillance et la détermination du classement hiérarchique des fragments comprend la détermination de groupes de préférence des canaux selon les fréquences de sélection des canaux et selon la position des canaux dans la liste de canaux, et
- un composant de téléchargement (310, 414) pour amorcer le téléchargement du ou des fragments vers le dispositif d'utilisateur sur la base du classement hiérarchique.

15. Noeud de réseau selon la revendication 14, comprenant en outre un composant d'interface pour s'interfacer (324) avec un second composant de surveillance (320) dans le dispositif d'utilisateur, le second composant de surveillance étant adapté pour surveiller le comportement d'utilisateur associé au dispositif d'utilisateur, dans lequel le composant d'interface est connecté de manière communicante au composant de classement hiérarchique.
